# EUROPÄISCHE PATENTANMELDUNG

(11) **EP 4 722 606 A1**
(43) Veröffentlichungstag der Anmeldung: **08.04.2026**
(21) Anmeldenummer: 25202643.0
(22) Anmeldetag: 17.09.2025
(51) Int. Cl.: F24D 19/00, F24D 19/10, F24D 3/18, F24D 17/02, F24D 17/00, F16K 11/087, F24D 3/08

(54) **WÄRMEPUMPENHYDRAULIKEINHEIT UND VENTILEINHEIT**

(30) Priorität: 01.10.2024 DE 102024128466
(71) Anmelder: Stiebel Eltron GmbH & Co. KG, 37603 Holzminden (DE)
(72) Erfinder: Ortsiefer, Sabrina, 31860 Emmerthal (DE); Stein, Sebastian, 318863 Coppenbrügge (DE); Nolte, Felix, 31855 Aerzen (DE); Böhning, Holger, 31860 Emmerthal (DE); Breker, Sebastian, 32839 Steinheim (DE); Ulrich, Hafner, 37671 Höxter (DE)

(57) **Zusammenfassung**

Wärmepumpen-Hydraulikeinheit, mit einem Hydraulikgehäuse, einer elektrischen Heizeinheit, einer Zirkulationspumpe und einer Ventileinheit, wobei die Ventileinheit ein Grundgehäuse mit einem Regelorgan in Form einer Kugel aufweist, welche einen Kugeleingang und einen Kugelausgang aufweist, die in einem Winkel zueinander angeordnet sind, wobei an dem Grundgehäuse mindestens zwei Abgangsstutzen anordbar sind, wobei durch Einstellen der Kugel der Ausgang der Kugel mit einem der Abgangsstutzen ausgerichtet wird.

## Beschreibung

Die vorliegende Erfindung betrifft eine Wärmepumpenhydraulikeinheit sowie eine Ventileinheit.

Wärmepumpen können verwendet werden, um sowohl Warmwasser zu erzeugen als auch ein Gebäude zu beheizen. Dazu wird typischerweise ein Pufferspeicher für das Warmwasser sowie ein Pufferspeicher für die Heizung eines Gebäudes vorgesehen.

DE 10 2021 118 041 A1 beschreibt ein Haustechnikgerät mit einer Wärmepumpe und einem Speicher sowie einem Pufferspeicher.

Es ist eine Aufgabe der vorliegenden Erfindung, eine Wärmepumpenanlage vorzusehen, welche kostengünstiger herzustellen ist und über einen geringeren Platzbedarf verfügt.

Diese Aufgabe wird durch eine Wärmepumpenhydraulikeinheit nach Anspruch 1 sowie durch eine Ventileinheit nach Anspruch 7 gelöst.

Die Wärmepumpenanlage kann eine Wärmepumpe, eine Hydraulikeinheit und einen Warmwasserpufferspeicher aufweisen. Die Hydraulikeinheit weist ferner ein Gehäuse, einen Wärmepumpenvorlauf, einen Wärmepumpenrücklauf, einen Warmwasserrücklauf, einen Warmwasservorlauf und mindestens einen Heizkreisvorlauf und einen Heizkreisrücklauf für einen Heizkreis auf. Die Hydraulikeinheit kann mit einem Warmwasserpufferspeicher gekoppelt sein. Die Vorlauf- und Rücklaufanschlüsse können unmittelbar mit dem Heizkreis gekoppelt sein, d. h. es ist kein Pufferspeicher dazwischen vorgesehen. Dies ist vorteilhaft, weil damit der Platzbedarf des Pufferspeichers eingespart werden kann.

Die Ventileinheit weist einen Zulauf und z. B. drei Abgangsstutzen auf. Die Ventileinheit weist ferner ein Grundgehäuse mit einem Regelorgan mit einer Kugel auf. An dem Grundgehäuse können Abgangsstutzen als Ausgänge vorgesehen sein.

Die Wärmepumpenhydraulikeinheit weist ein Gehäuse, eine elektrische Heizeinheit, ein Vierwegeventil und optional eine Zirkulationspumpe auf, welche bei ihrer Aktivierung ein Fluid durch mindestens einen Heizkreis pumpen kann.

Die Hydraulikeinheit ist mittels des Wärmepumpenvorlaufs und Wärmepumpenrücklaufs mit den entsprechenden Anschlüssen der Wärmepumpe gekoppelt. Die Zirkulationspumpe sowie die elektrische Heizeinheit können in Reihe mit dem Wärmepumpenvorlauf vorgesehen sein. Das Vierwegeventil kann mit dem Ausgang der elektrischen Heizeinheit, einem Warmwasservorlaufanschluss, einem Vorlaufanschluss des Heizkreises und optional mit einer Überstromstrecke gekoppelt sein. Das Vierwegeventil kann auch mit einem Vorlauf eines zweiten Heizkreises gekoppelt sein.

Durch entsprechende Steuerung des Vierwegeventils lassen sich mehrere Betriebsarten realisieren. Insbesondere kann eine Betriebsart Warmwasserbereitung, eine Heizbetriebsart des ersten Heizkreises, eine Heizbetriebsart des ersten Heizkreises inklusive einer Überströmung durch die Überströmungsstrecke, ein Heizbetrieb mit einem geschlossenen ersten Heizkreis sowie einer Überströmung durch die Überströmungsstrecke, einem Abtaubetrieb mit offenem ersten Heizkreis, einem weiteren Abtaubetrieb mit einem Heizkreis und einer Überströmung durch die Überströmungsstrecke, eine weitere Abtaubetriebsart mit einer Überströmung über die Überströmungsstrecke, einem vierten Abtaubetrieb mit einem ersten Heizkreis sowie einer Überströmung im Warmwasserspeicher sowie einer fünften Abtaubetriebsart mit einer Überströmung im Warmwasserspeicher und einer Energieaufnahme über den Warmwasserspeicher ermöglicht werden.

Die Ventileinheit ist vorteilhaft, da die Anzahl der benötigten Komponenten reduziert werden konnte. Die Ventileinheit weist einen Grundkörper mit z.B. vier Anschlüssen auf, an welchen ein Zulaufstutzen und drei Abgangsstutzen befestigt werden können. Zur Anpassung an unterschiedliche Geometrien können unterschiedliche Zulaufstutzen oder Abgangsstutzen verwendet werden. Zum Beispiel können abgeknickte oder gerade Abgangsstutzen verwendet werden. Ferner können die Abgangsstutzen mit unterschiedlichen Ausrichtungen an den Ausgängen des Grundkörpers angeordnet werden.

Die Spindel kann mit einem Ende mit der Kugel gekoppelt sein und das andere Ende kann als Rastkupplung/Schnellkopplung ausgestaltet sein, so dass ein Antrieb mittels der Rastkopplung/Schnellkopplung mit der Spindel koppelbar ist.

Durch die Geometrie der Kugel (dem Eingang und dem Ausgang) und insbesondere mit dem sich verjüngenden Ende des Ausgangs können auch kleinere Volumenströme verbessert eingestellt werden. Durch Reduzierung der Größe der effektiven Öffnung des Ausgangs kann der Volumenstrom definiert reduziert werden.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Wärmepumpenanlage,
- Fig. 2A: zeigt eine schematische Schnittansicht einer Ventileinheit der Wärmepumpenhydraulikeinheit,
- Fig. 2B: zeigt einen weiteren schematischen Querschnitt der Ventileinheit von Fig. 2A,
- Fig. 2C: zeigt eine weitere perspektivische Schnittansicht der Ventileinheit 300 von Fig. 2A,
- Fig. 3: zeigt eine Explosionsdarstellung der Ventileinheit 300,
- Fig. 4A und 4B: zeigen jeweils eine perspektivische Ansicht einer Ventileinheit,
- Fig. 4C: zeigt eine weitere perspektivische Ansicht eines Teils der Ventileinheit 300,
- Fig. 5A: zeigen jeweils eine Kombination aus einer Spindel und der Kugel als
- und 5B: Regelorgan,
- Fig. 6A und 6B: zeigen jeweils eine Spindel, und
- Fig. 7Abis 7G: zeigen verschiedene Ansichten der Kugel als Regelorgan.

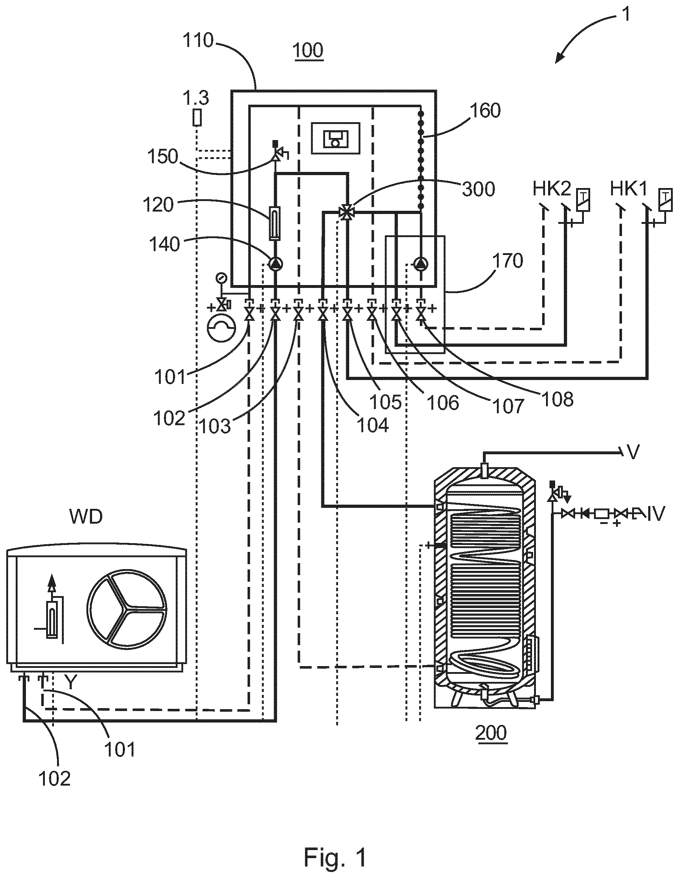

Fig. 1 zeigt eine schematische Darstellung einer Wärmepumpenanlage. In Fig. 1 ist eine Wärmepumpenanlage oder ein Haustechnikgerät 1 dargestellt, welches eine Wärmepumpe WP, eine Hydraulikeinheit 100 sowie einen Warmwasserspeicher 200 aufweist.

Die Hydraulikeinheit 100 weist einen ersten und zweiten Anschluss 101, 102 als Anschlüsse für den Rücklauf RL der Wärmepumpe sowie den Vorlauf VL der Wärmepumpe auf. Des Weiteren weist die Hydraulikeinheit 100 einen dritten und vierten Anschluss 103, 104 auf, welche als Rücklauf RLW und Vorlauf VLW für die Warmwasserbereitung ausgestaltet sind. Des Weiteren weist die Hydraulikeinheit 100 einen sechsten und siebten Anschluss 106, 107 für den Rücklauf RLHK1 eines ersten Heizkreises HK1 und den Vorlauf VLHK1 eines ersten Heizkreises HK1 auf.

Optional kann die Hydraulikeinheit 100 einen siebten und achten Anschluss 107, 108 für einen Vorlauf VLHK2 und einen Rücklauf RLHK2 eines zweiten Heizkreises HK2 aufweisen.

Die Hydraulikeinheit 100 weist eine Zirkulationspumpe 140 an dem zweiten Anschluss 102 sowie in Reihe zu der Zirkulationspumpe 140 eine elektrische Heizeinheit 120 auf. Optional kann eine Sicherheitsgruppe 150 am Ausgang der Heizeinheit 120 vorgesehen sein. Ferner weist die Hydraulikeinheit 100 eine Ventileinheit 300 auf. Die Ventileinheit 300 weist vier Anschlüsse auf. Durch Steuerung der Ventileinheit 300 können die jeweiligen Anschlüsse miteinander gekoppelt werden.

Ferner kann optional ein zweiter Heizkreis HK2 mit einem Heizkreisvorlauf 107 und einem Heizkreisrücklauf 108 vorgesehen sein. Falls ein zweiter Heizkreis HK2 vorgesehen ist, dann kann optional eine zweite Zirkulationspumpe 170 vorgesehen sein.

Die Wärmepumpenanlage 1 weist ferner einen Pufferspeicher 200 für Warmwasser auf, welcher mit dem dritten und vierten Anschluss 103, 104, welche den Warmwasserrücklauf und den Warmwasservorlauf darstellen, gekoppelt ist.

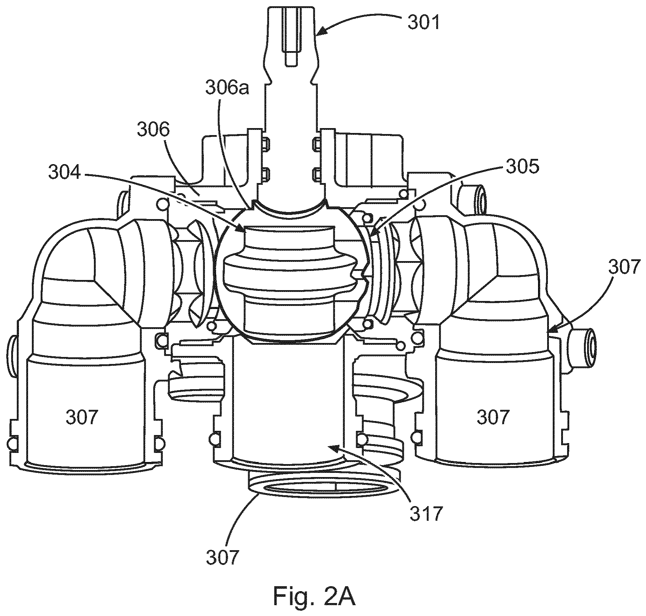

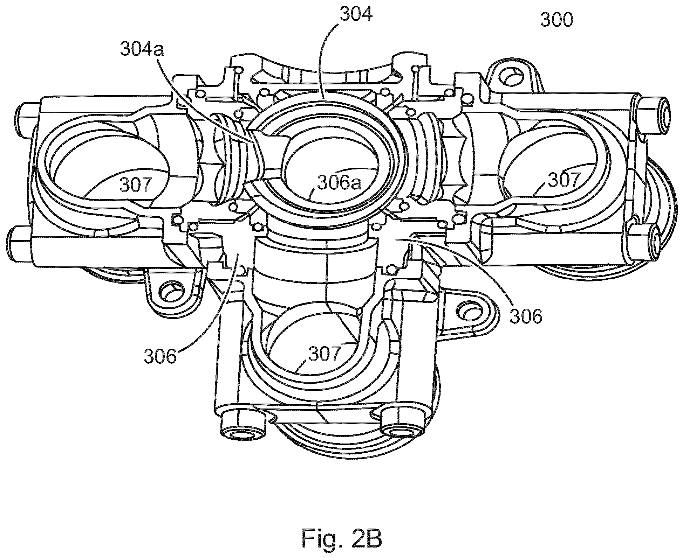

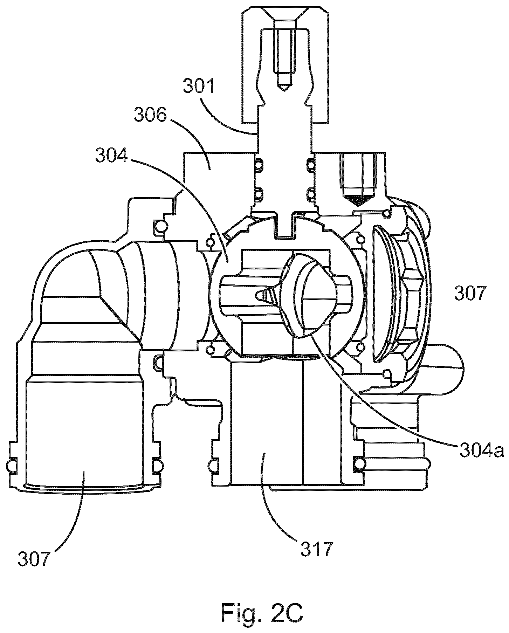

Fig. 2A zeigt eine schematische Schnittansicht einer Ventileinheit der Wärmepumpenhydraulikeinheit. Fig. 2B zeigt einen weiteren schematischen Querschnitt der Ventileinheit von Fig. 2A. Fig. 2C zeigt eine weitere perspektivische Schnittansicht der Ventileinheit 300 von Fig. 2A. Die Ventileinheit 300 kann als ein Vier-/Dreiwegeventil ausgestaltet sein. Die Ventileinheit 300 weist einen Grundkörper 306 auf, an welchem modular unterschiedliche Abgangsstutzen 307 montiert werden können. Der Grundkörper 306 weist in seiner Mitte ein Volumen 306a zur Aufnahme eines Regelorgans 304 auf. Das Regelorgan 304 kann beispielsweise als Kugel 304 ausgestaltet sein. Die Kugel 304 kann mittels Dichtelementen 305, 313, 311 in dem Grundkörper 306 abgedichtet sein. Die Stutzen 307 können gerade oder beispielsweise um 90° abgewinkelt angeordnet sein. Die Abwinkelung der Abgangsstutzen 307 kann wie in Fig. 2A dargestellt dazu führen, dass alle Stutzen 307 in einer Ebene zu kontaktieren sind. Die Kugel 304 kann mit einer Spindel 301 drehfest gekoppelt sein, so dass eine Betätigung der Spindel 301 zu einer Drehung der Kugel 304 führen kann. Damit kann durch entsprechende Drehung der Spindel 301 eine Drehung der Kugel 304 erreicht werden, so dass eine Öffnung 304a der Kugel 304 zu einem der Abgangsstutzen 307 hin zeigt. Die Spindel 301 ist somit ein Antrieb zum Verstellen der Kugel 304.

Die Ventileinheit 300 kann einen Zulaufstutzen 317 als Eingang aufweisen, welcher optional gegenüberliegend zur Spindel 301 angeordnet ist. Durch den Zulaufstutzen 307 kann Fluid in die Ventileinheit eindringen und mittels der Kugel 304 als Regelorgan kann das Fluid in einen der Abgangsstutzen 307 (als Ausgang) entsprechend der Stellung der Spindel 301 und damit der Stellung der Kugel 304 geleitet werden.

Die Ventileinheit 300 ist vorteilhaft, weil sie modular aufgebaut ist, so dass verschiedene Abgangsstutzen 307 an dem Grundkörper anschließbar sind. Der Grundkörper 306 sowie die Abgangsstutzen 307 und der Zulaufstutzen 317 können aus Messing oder Kunststoff hergestellt werden.

Mittels der Ventileinheit 300, welche in einer Wärmepumpenhydraulikeinheit eingesetzt wird, wird ein Zulauf 317 und drei Abgangsstutzen 307 bzw. Abläufe realisiert. Damit können mittels der Ventileinheit 300 beispielsweise zwei Heizkreise sowie ein Speicher an den jeweiligen Abgangsstutzen 307 angeschlossen werden.

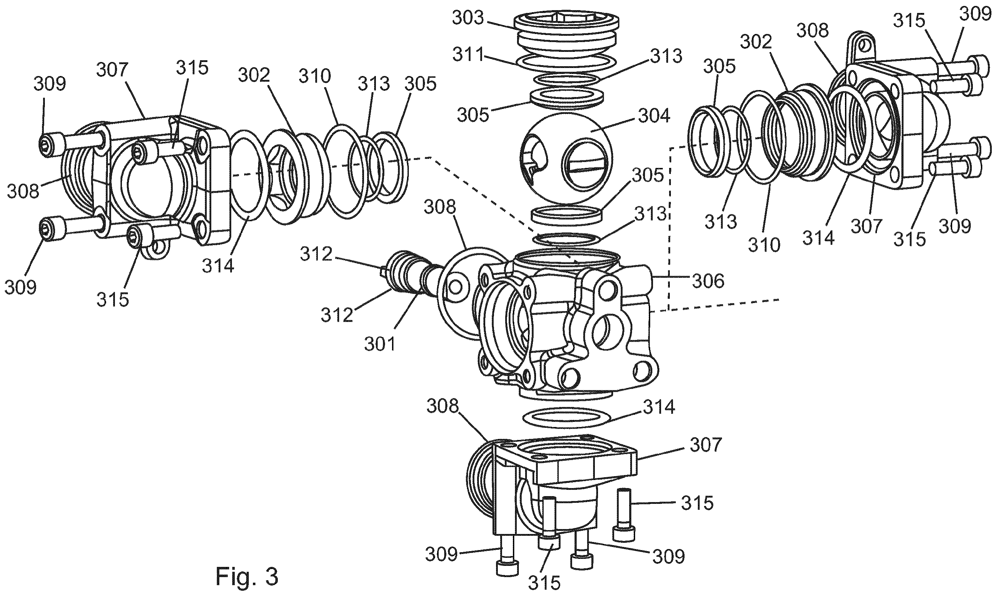

Fig. 3 zeigt eine Explosionsdarstellung der Ventileinheit 300. Die Ventileinheit weist einen Grundkörper 306 sowie drei Anschlüsse für Abgangsstutzen 307 auf. Über ein weiteres Ende des Grundkörpers 306 kann ein Zulaufstutzen 317 gekoppelt werden.

Der Grundkörper 306 weist ein Innenvolumen 306a auf, in welchem ein Regelorgan 304 in Form einer Kugel 304 vorgesehen ist. Die Kugel 304 kann mittels Dichtungen 305, 313, 311 abgedichtet werden. Mittels eines Kopfstückes 303 kann die Kugel 304 in dem Volumen 306a gehalten werden. Die Abgangsstutzen 307 können mittels Schrauben 309, 315 an dem Grundkörper 306 gekoppelt sein. Optional können mehrere Dichtungen 305, 313, 310 vorgesehen sein. Mittels eines Kopfstückes 302 können die Dichtungen im Inneren des Grundkörpers 306 gehalten werden. Zwischen einem Kopfstück 302 und dem Abgangsstutzen 307 kann eine weitere Dichtung 314 vorgesehen sein. Am Ausgang des Abgangsstutzens 307 kann eine weitere Dichtung 308 vorgesehen sein.

In Fig. 3 sind die Abgangsstutzen als Winkel ausgestaltet, d. h. die Ebene des Ausgangs ist im Wesentlichen im 90° zur Ebene eines Eingangs.

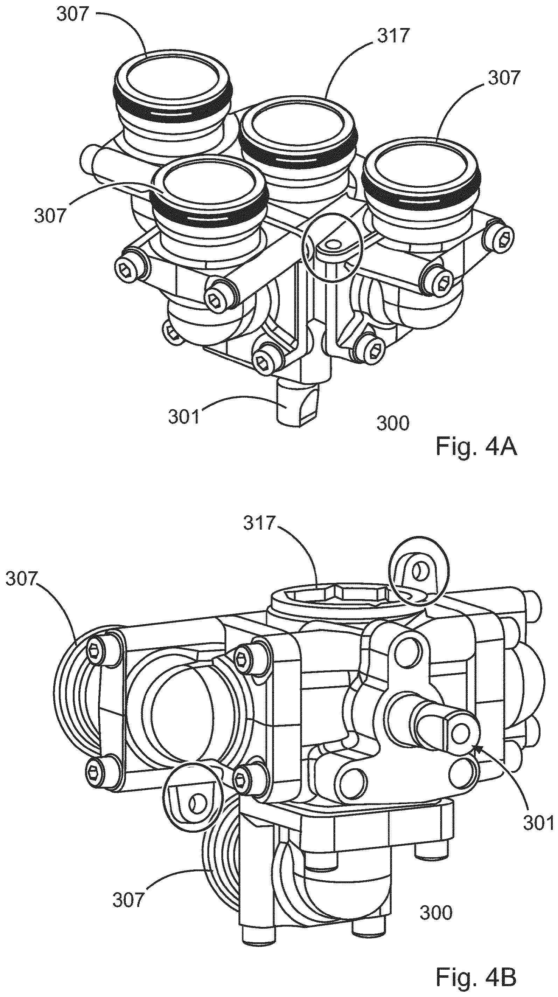

Fig. 4A und 4B zeigen jeweils eine perspektivische Ansicht einer Ventileinheit. Die Ventileinheit 300 weist einen Zulaufstutzen 317 sowie drei Abgangsstutzen 307 auf. Ein Regelorgan des Ventils kann mittels einer Spindel 301 gesteuert werden.

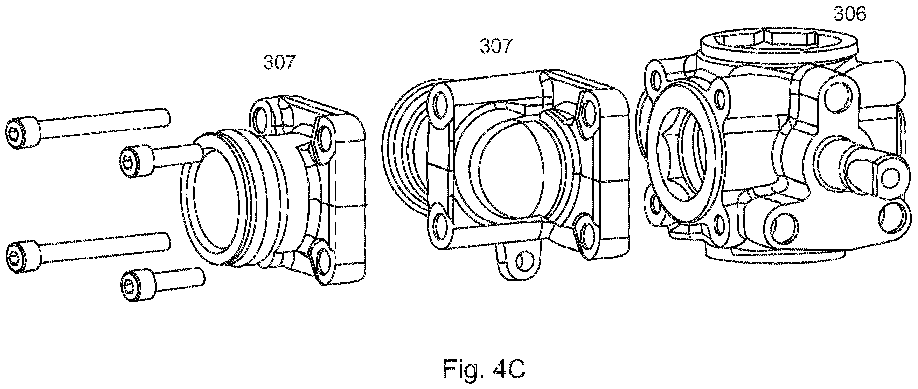

Fig. 4C zeigt eine weitere perspektivische Ansicht eines Teils der Ventileinheit 300. Die Ventileinheit 300 weist einen Grundkörper 306 sowie mehrere Anschlüsse auf, an welchen ein abgewinkelter Abgangsstutzen 307 oder ein gerader Abgangsstutzen 307 angeschlossen werden kann.

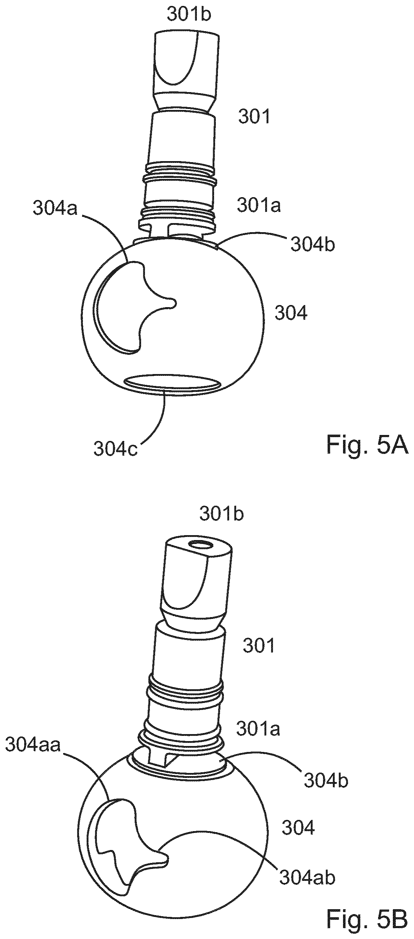

Fig. 5A und 5B zeigen jeweils eine Kombination aus einer Spindel und der Kugel als Regelorgan. Ein erstes Ende 301a der Spindel 301 ist an einem ersten Ende 304b mit der Kugel 304 gekoppelt. Die Kugel 304 weist ein erstes Ende 304b und eine erste Öffnung 304a auf. Ferner ist eine zweite Öffnung 304c gegenüberliegend zu der Spindel 303 vorgesehen. Die erste Öffnung 304a kann im Wesentlichen rechtwinklig zur zweiten Öffnung 304c angeordnet sein. Die Öffnung 304a weist ein erstes Ende 304aa und ein zweites Ende 304ab auf. Das erste Ende 304aa ist dabei optional halbkreisförmig ausgestaltet und weist eine größere Breite als das erste Ende 304ab auf. Die lichte Weite bzw die Breite der zweiten Endes 304ab nimmt zum Ende hin ab.

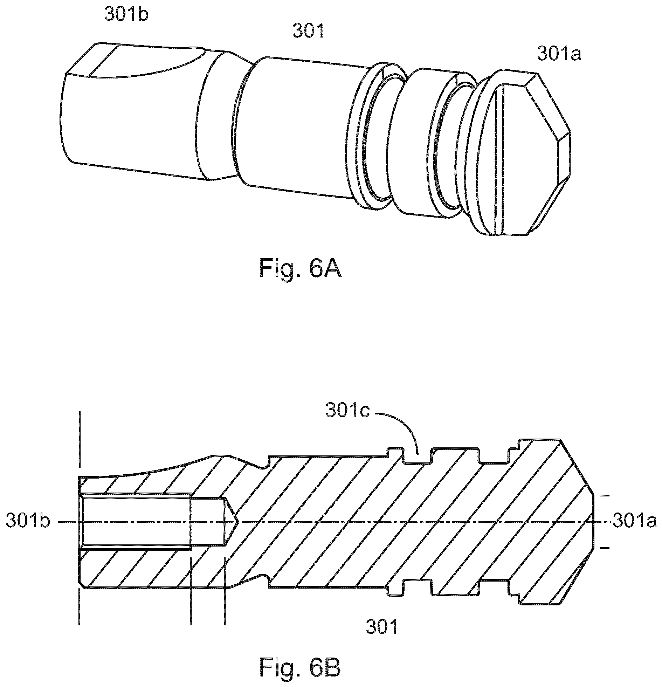

In den Figuren 6A und 6B ist jeweils eine Spindel dargestellt. Die Spindel 301 weist ein erstes und zweites Ende 301a, 301b auf, wobei das erste Ende 301a mit einem Ende 304b der Kugel 304 koppelbar ist. Das zweite Ende 301b kann mittels eines Motors angetrieben werden. Zwischen dem ersten und zweiten Ende 301a, 301b können mehrere ringförmige Ausnehmungen 301c vorgesehen sein. Diese können beispielsweise zur Montage des ersten Endes an einem Motor oder einem Antrieb dienen.

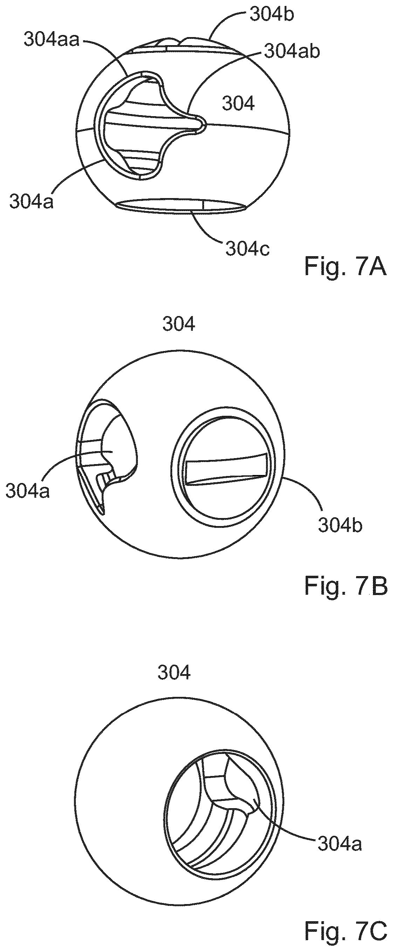

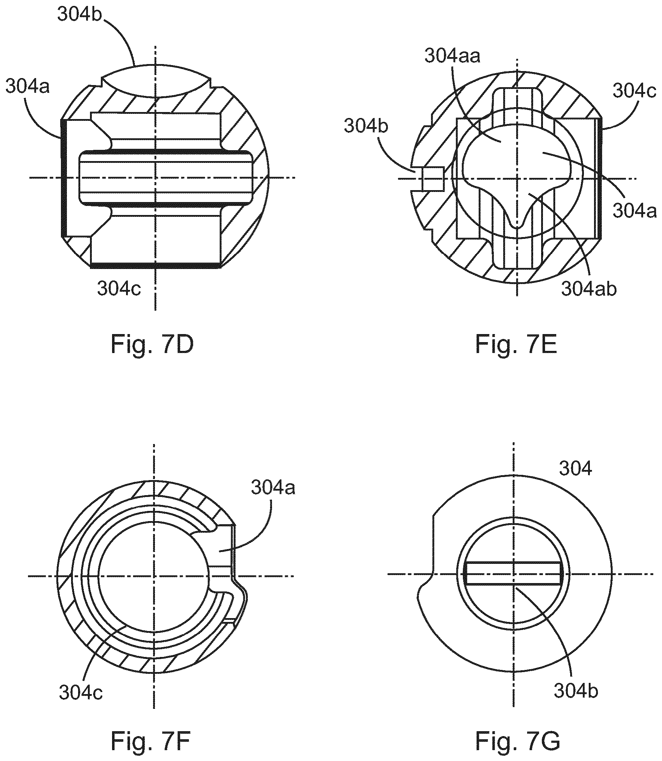

Fig. 7A bis 7G zeigen verschiedene Ansichten der Kugel als Regelorgan. Die Kugel 304 weist ein erstes und zweites Ende 304b, 304c auf. An dem ersten Ende 304b kann die Kugel mit einer Spindel 301 gekoppelt werden. An der zweiten Öffnung 304c ist ein Zulaufstutzen 317 koppelbar. Die Kugel 304 weist insbesondere eine Öffnung 304a auf, welche ein erstes und zweites Ende 304aa, 304ab aufweist. Das erste und zweite Ende 304aa und 304ab sind nicht symmetrisch zueinander ausgestaltet. Das erste Ende 304aa kann im Wesentlichen einen Kreisbogenabschnitt darstellen. Das zweite Ende 304ab weist eine abnehmende lichte Weite auf.

### Bezugszeichenliste

- 1: Haustechnikgerät
- 100: Hydraulikeinheit
- 101: Wärmepumpenrücklauf
- 102: Wärmepumpenvorlauf
- 103: dritter Anschluss
- 104: vierter Anschluss
- 105: Heizkreisvorlauf
- 106: sechster Anschluss
- 107: siebter Anschluss
- 108: achter Anschluss
- 120: Heizeinheit
- 131: erster Anschluss
- 132: zweiter Anschluss
- 133: dritter Anschluss
- 134: vierter Anschluss
- 140: Zirkulationspumpe
- 150: Sicherheitsgruppe
- 160: Überströmungsstrecke
- 170: zweite Zirkulationspumpe
- 200: Warmwasserspeicher
- 300: Ventileinheit
- 301: Spindel
- 301a: erstes Spindelende
- 301b: zweites Spindelende
- 301c: Spindel
- 302: Kopfstück
- 303: Kopfstück
- 304: Kugel
- 304a: Kugelausgang
- 304aa: erstes Ende
- 304ab: zweites Ende
- 304b: Kugelende
- 304c: Kugeleingang
- 305: Dichtung
- 306: Grundgehäuse
- 306a: Grundgehäuse-Innenvolumen
- 307: Abgangsstutzen
- 308: Dichtung
- 309: Schraube
- 310: Dichtung
- 311: Dichtung
- 312: Dichtung
- 313: Dichtung
- 314: Dichtung
- 315: Schrauben
- 317: Zulaufstutzen
- RL: Rücklauf
- RLW: Rücklauf
- VL: Vorlauf
- VLW: Vorlauf
- WP: Wärmepumpe

## Patentansprüche

1. Wärmepumpen-Hydraulikeinheit (100), mit
einem Hydraulikgehäuse (110),
einer elektrischen Heizeinheit (120),
einer Zirkulationspumpe (140), und
einer Ventileinheit (300),
wobei die Ventileinheit (300) ein Grundgehäuse (306) mit einem Regelorgan in Form einer Kugel (304) aufweist, welche einen Kugeleingang (304c) und einen Kugelausgang (304a) aufweist, die in einem Winkel zueinander angeordnet sind,
wobei an dem Grundgehäuse (306) mindestens zwei Abgangsstutzen (307) anordbar sind,
wobei durch Einstellen der Kugel (304) der Ausgang (304a) der Kugel (304) mit einem der Abgangsstutzen (307) ausgerichtet wird.

2. Wärmepumpen-Hydraulikeinheit (100) nach Anspruch 1, wobei
freie Enden eines Zulaufstutzens (317) und der mindestens zwei Abgangsstutzen (307) in einer Ebene angeordnet sind.

3. Wärmepumpen-Hydraulikeinheit (100) nach Anspruch 1 oder 2, wobei
die Kugel (304) mittels einer Spindel ((301) steuerbar ist.

4. Wärmepumpen-Hydraulikeinheit (100) nach einem der vorherigen Ansprüche, wobei
der Eingang (304c) der Kugel (304) mit dem Zulaufstutzen (317) ausgerichtet ist und der Ausgang (304a) mit einem der Abgangsstutzen (307) ausgerichtet ist.

5. Wärmepumpen-Hydraulikeinheit (100) nach einem der vorherigen Ansprüche, wobei
der Ausgang (304a) der Kugel (304) ein erstes und zweites Ende (304aa, 304ab) aufweist, wobei das zweite Ende (304ab) sich verjüngt.

6. Wärmepumpenanlage, mit
einer Wärmepumpen-Hydraulikeinheit (100) nach einem der Ansprüche 1 bis 5,
einer Wärmepumpe (WP), und
einem Warmwasser-Pufferspeicher (200).

7. Ventileinheit (300), mit
einem Grundgehäuse (306) mit einem Regelorgan in Form einer Kugel (304), welche einen Kugeleingang (304c) und einen Kugelausgang (304a) aufweist, die in einem Winkel zueinander angeordnet sind,
wobei an dem Grundgehäuse (306) mindestens zwei Abgangsstutzen (307) anordbar sind,
wobei durch Einstellen der Kugel (304) der Ausgang (304a) der Kugel (304) mit einem der Abgangsstutzen (307) ausgerichtet wird.
